# EUROPEAN PATENT APPLICATION

(11) **EP 4 063 040 A1**
(43) Date of publication of application: **28.09.2022**
(21) Application number: 20888733.1
(22) Date of filing: 27.10.2020
(51) Int. Cl.: B22D 19/00, B60T 11/16

(54) **MASTER CYLINDER MANUFACTURING METHOD**

(30) Priority: 21.11.2019 KR 20190150195
(71) Applicant: Pyong Hwa Valeo Co., Ltd., Daegu 43022 (KR); Dosys Co., Ltd., Gyeongsangbuk-do 39266 (KR)
(72) Inventor: SO, Yoon Sub, Seoul 06624 (KR); SEO, Dong Young, Daegu 41460 (KR); LEE, Seung Hyun, Gimcheon-si Gyeongsangbuk-do 39620 (KR)
(74) Representative: Treeby, Philip David William
(86) International application number: PCT/KR2020/014717
(87) International publication number: WO 2021/101102

(57) **Abstract**

A method for manufacturing a master cylinder is provided. The present invention includes molding an inner body having an inner hole with one opened end and a protrusion at the other sealed end; arranging the inner body in a cavity of a mold formed by combining a main body mold with a fixing groove into which the protrusion is correspondingly inserted to arrange the inner body therein, and a cover mold that seals the one opened end of the inner body; molding an outer body to be integrated with the inner body by injecting a molten material into the cavity to cover the entire outer surface of the inner body; and separating a cylinder main body in which the inner body and the outer body are integrated from the mold to post-treat the cylinder main body.

## Description

### CROSS-REFERENCE TO RELATED APPLICATION

This application claims priority to and the benefit of Korean Patent Application No. 10-2019-0150195, filed on 21 Nov, 2019 and No. 10-2020-0139835, filed on 27 Oct, 2020, the disclosure of which is incorporated herein by reference in its entirety.

### [Technical Field]

The present invention relates to a method for manufacturing a master cylinder applied to a vehicle, and more specifically, the present invention relates to a method for manufacturing a master cylinder capable of manufacturing a cylinder main body for a master cylinder by sequentially performing a pre-process of molding an inner body with a primarily forged material and a post-process of secondarily casting to integrate an outer body with the inner body molded by the pre-process.

### [Background Art]

In general, a master cylinder is basically classified into a single master cylinder with one pressure chamber and a tandem master cylinder with two independent pressure chambers. The tandem master cylinder is used for brakes because the hydraulic pressure of the remaining system is normally generated even if one of the two system brakes is damaged, and the single master cylinder is used for a clutch that blocks or transmits power and for a two-wheeled vehicle brake.

The master cylinder provided in a vehicle is a device that converts a pedal force into a hydraulic pressure, and includes an oil tank in which oil is stored, a cylinder portion coupled with the oil tank, a piston installed inside the cylinder portion to move forward or backward depending on the presence or absence of a pedal force, and a sealing member installed on the inner circumferential surface of the cylinder portion to contact the outer circumferential surface of the piston when the piston advances to seal the inside of the cylinder portion.

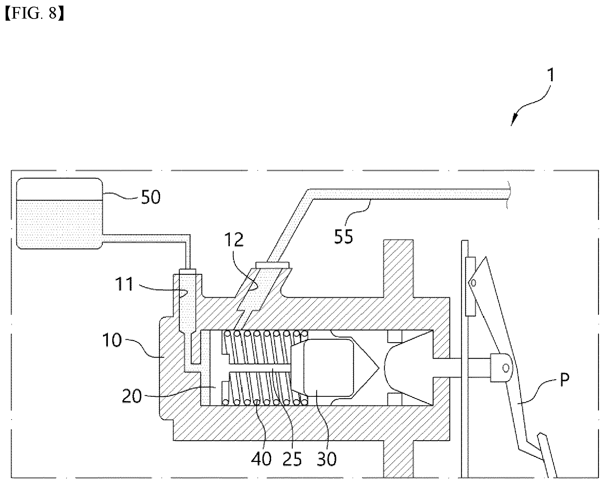

That is, as an example illustrated in FIG. 8, the master cylinder 1 may include a cylinder main body 10 molded by a lightweight material such as aluminum, a piston 20 disposed inside the cylinder body 10 and reciprocating, a plunger 30 connected via a stem, and a return spring 40 provided between the plunger 30 and the piston 20 operated by being connected to a mechanical or electronic pedal P.

When the pedal P is operated by being pressed, oil in the cylinder main body corresponding to between the plunger and the piston is supplied to a release cylinder (not illustrated) through an oil supply line 55 connected in communication with a second inflow and outflow hole 12 formed through the cylinder main body 10. When the pedal is depressed, oil stored in an oil tank is supplemented through a first inflow and outflow hole 11 formed through the cylinder main body 10 and connected in communication with the oil tank 50.

In the process of manufacturing a cylinder main body, which is a core part of a master cylinder, a cylinder main body is molded and manufactured by any one of manufacturing methods of the die-casting method, gravity casting method, and forging method, and after machining the inside and outside of the molded cylinder main body, it is assembled with components such as a piston, plunger, and return spring to finally complete the manufacture of the finished product of a master cylinder which is used for clutches or brakes.

However, in the case of manufacturing the cylinder main body of a master cylinder by the gravity casting method, it is molded by heating an aluminum material to the melting point or higher to inject into a mold and the like in a liquefied state such that a molded product having a clean surface can be obtained. Even though there are advantages that the equipment cost is relatively inexpensive and the initial maintenance cost is low, the liquid material solidifies during the casting process to create a coarse dendrite, which not only degrades physical properties, but also causes internal defects due to air bubbles or solidification shrinkage.

In this case, since the solidified material becomes in a state where heat treatment, welding, and the like are impossible, it is impossible to manufacture a final product having excellent physical properties, and product defects frequently occur due to pores exposed during internal processing of the cylinder main body. Meanwhile, when surface treatment such as hard anodizing is additionally performed for structural rigidity, the surface roughness is deteriorated due to the anodizing acid treatment, which has caused an oil leakage phenomenon.

In addition, when the cylinder main body for a master cylinder is manufactured by the forging method, the material in a cold or hot state is pressed at a certain pressure using a press and the like, and thus, the life of a mold is shortened by the pressure of the press, and the manufacturing cost is increased. In addition, the processing process is complicated and there is a limitation in shape, and there is a problem that minute cracks are generated in the forged cylinder main body.

In addition, when the cylinder main body for a master cylinder is manufactured by the die-casting method, there are advantages in which products with a thin thickness and a complex overall structure can be manufactured, and at the same time, it has a high production speed so as to reduce the manufacturing cost and enable mass production. On the other hand, there have been problems in which there are limitations in mechanical properties, resulting in poor dimensional accuracy and poor surface finish, and the product defect rate is high, where internal pores are generated on the cast surface, thereby reducing the product yield.
(Patent Document 1) KR10-1442662 B1
(Patent Document 2) KR10-0833280 B1
(Patent Document 3) KR10-0407836 B1
(Patent Document 4) KR10-2015-0075869 A

### [Disclosure]

### [Technical Problem]

Accordingly, the present invention is to solve the aforementioned problems, and the object is to provide a method for manufacturing a master cylinder capable of manufacturing a cylinder main body in which an inner body and an outer body are integrated by sequentially performing a pre-process of primarily forging an inner body, and secondarily casting and molding an outer body to be integrated with the primarily forged inner body.

The technical problems to be achieved in the present invention are not limited to the technical problem mentioned above, and other technical problems that are not mentioned will be clearly understood by a person of ordinary skill in the art to which the present invention pertains from the following description.

### [Technical Solution]

As a specific means to achieve the above object, a preferred exemplary embodiment of the present invention provides a method for manufacturing a master cylinder, including molding an inner body having an inner hole with one opened end and a protrusion at the sealed other end; arranging the inner body in a cavity of a mold formed by combining a main body mold with a fixing groove into which the protrusion is correspondingly inserted to arrange the inner body therein, and a cover mold that seals the one opened end of the inner body; molding an outer body to be integrated with the inner body by injecting a molten material into the cavity to cover the entire outer surface of the inner body; and separating a cylinder main body in which the inner body and the outer body are integrated from the mold to post-treat the cylinder main body.

In this case, in the molding of the inner body, a hollow body with both opened ends may be molded by a forging, extruding, or drawing process, and the inner body may be molded by integrally sealing a blocking plate at one opened end of the hollow body.

In this case, in the arranging the inner body, when the main body mold and the cover mold are combined, the one opened end of the inner body may protrude from the inner side surface of the cover mold and may be sealed in contact with an inner cover forming an injection line.

In this case, the inner body may form an uneven portion on the entire outer surface corresponding to the outer body, or may be formed to protrude from the outer surface of the outer body to form an uneven portion locally in a region corresponding to an outer protrusion formed through an inflow and outflow hole.

In this case, the uneven portion may be provided in a pattern in which ridges with a sharp end or a sharply acute angle or rounded valleys which are concave downward are repeatedly formed.

In this case, in the molding of the outer body, the injection temperature of a molten material injected into the cavity of the mold may be set to a temperature which is relatively higher than the melting temperature of a material constituting the inner body.

### [Advantageous Effects]

According to a preferred exemplary embodiment of the present invention as described above, the present invention has the following effects.

Since product defects due to pores generated during gravity casting of a cylinder main body can be fundamentally prevented by primarily pre-processing an inner body made by a forging process and then secondarily post-processing an outer body by a casting process to be integrated with the pre-processed inner body, it is possible to increase the yield by lowering the product defect rate.

Weight reduction can be achieved because the weight can be reduced compared to the total weight of the cylinder main body manufactured by gravity casting and die casting by manufacturing a cylinder main body by primarily pre-molding an inner body and secondarily post-molding an outer body to be integrated with the inner body.

Since the inner body in which the component parts are embedded is made of a rigid material with a heavy weight and the external body exposed to the outside is made of a lightweight soft material, it is possible to precisely perform surface processing on the inner surface of the inner body that is assembled by being combined with the component parts. Since finishing and post-processing of the outer body are easy, it is possible to increase the bonding strength with the component parts and increase the assembly precision, and thus, it is possible to improve product reliability, and the post-treatment process can be performed easily.

### [Description of Drawings]

FIG. 1 is a block diagram illustrating an inner body applied to the method for manufacturing a master cylinder according to an exemplary embodiment of the present invention.
FIG. 2 is a block diagram illustrating a state in which an inner body and a mold, which are applied to the method for manufacturing a master cylinder according to an exemplary embodiment of the present invention, are coupled.
FIG. 3 is a block diagram illustrating a state in which an outer body is molded by placing an inner body, which is applied to the method for manufacturing a master cylinder according to an exemplary embodiment of the present invention, in a mold.
FIG. 4 is a block diagram illustrating a cylinder main body in which an inner body and an outer body, which are applied to the method for manufacturing a master cylinder according to an exemplary embodiment of the present invention, are integrated and demolded from a mold
FIG. 5 is a block diagram illustrating a state in which first and second inflow and outflow holes are formed in a cylinder main body, which is applied to the method for manufacturing a master cylinder according to an exemplary embodiment of the present invention.
FIG. 6 is a process flowchart of the method for manufacturing a master cylinder according to an exemplary embodiment of the present invention.
FIGS. 7A, 7B, and 7C are block diagrams illustrating different forms of an inner body, which is applied to the method for manufacturing a master cylinder according to an exemplary embodiment of the present invention.
FIG. 8 is a schematic block diagram illustrating a general master cylinder.

### [Modes of the Invention]

Hereinafter, preferred exemplary embodiments of the present invention will be described in detail with reference to the accompanying drawings for a person of ordinary skill in the art to which the present invention pertains to easily practice the present invention. However, when it is determined that a detailed description of a related known function or configuration may unnecessarily obscure the gist of the present invention in describing in detail the structural principle of preferred exemplary embodiments of the present invention, the detailed description thereof will be omitted.

In addition, the same reference numerals are used for parts having similar functions and actions throughout the entire drawings.

Furthermore, throughout the entire specification, when a part is said to be 'connected' with another part, it not only includes cases of being 'directly connected', but also cases of being 'indirectly connected' with another element in the middle. In addition, 'including' a certain component means that other components may be further included, rather than excluding other components unless specifically stated to the contrary.

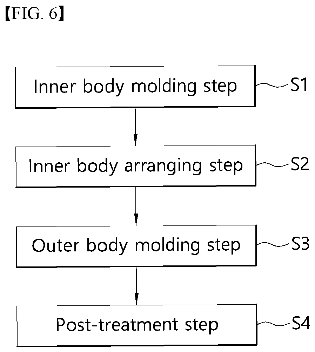

As illustrated in FIG. 6, the method for manufacturing a master cylinder according to an exemplary embodiment of the present invention may include an inner body molding step S1, an inner body arranging step S2, an outer body molding step S3, and a post-treatment step S4.

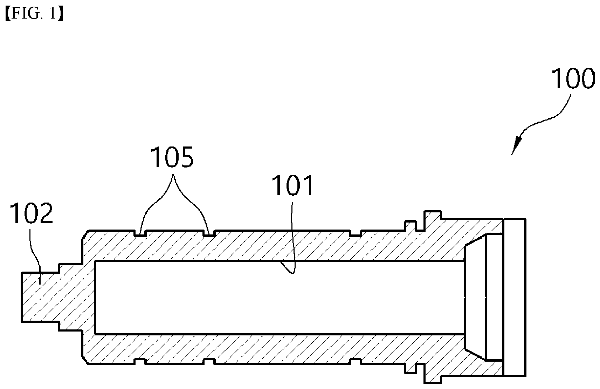

As illustrated in FIG. 1, the inner body molding step S1 molds an inner body 100 having an inner hole 101 with one opened end inside the body, and a protrusion 102 protruding outward for a predetermined length at the other sealed end.

The inner body 100 may have at least one recessed groove 105 concavely formed on an outer surface thereof so as to increase a contact area with the outer body 300.

Such an inner body 100 accommodates a piston 20, a plunger 30, and a return spring 40 constituting a master cylinder therein, and it is a structure in which each outer surface of the piston 20 and the plunger 30 is in contact with the inner surface.

Such an inner body 100 may be made of a metal material such as an aluminum alloy as a raw material, and may be manufactured by a forging process such as a hot molding process or a cold molding process in which the raw material is placed between the upper and lower dies and then pressed at high pressure, but is not limited thereto, and it may be manufactured by molding a hollow material with both opened ends by an extrusion or drawing process, and integrally welding a blocking plate at one opened end for sealing.

In addition, it is preferable that the inner body 100 is machined to have an average particle size of 4 µm to 10 µm with respect to the inner surface of the inner hole in contact with each outer surface of the piston and plunger.

By surface treatment of the inner surface of such an inner body 100, when contacting the piston and the plunger, the degree of adhesion may be increased to prevent oil leakage.

In this case, surface treatment machining of the inner surface of the inner hole of the inner body 100 may be performed by primarily molding the inner body and then performing precision machining using a machine tool such as a CNC lathe, but is not limited thereto, and precision machining may be performed using a cylinder main body in which an outer body and an inner body to be described below are integrated as a machine tool.

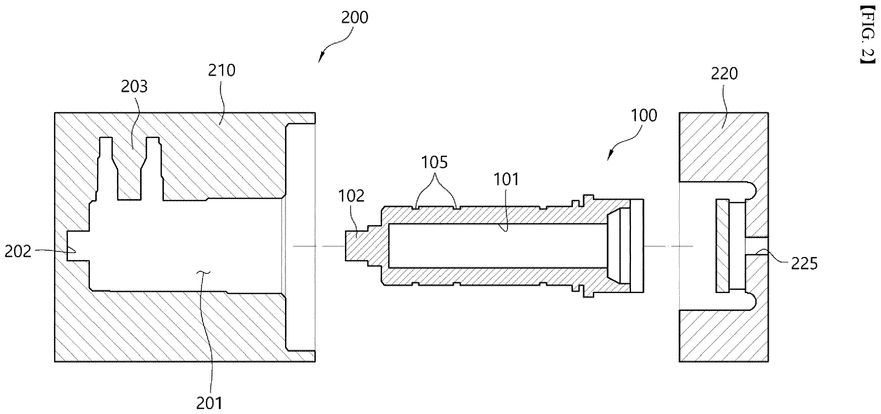

As illustrated in FIG. 2, the inner body arranging step S2 arranges the inner body 100 manufactured in a pre-process so as to perform a casting process for the outer body 300 in the cavity of a mold 200 made of a main body mold 210 and a cover mold 220.

The protrusion 102 of the inner body is correspondingly inserted into a fixing groove 202 which is concavely formed inside the main body mold 210 such that the inner body is disposed in the inner space of the main body mold forming the cavity 212 to be located correctly.

By combining the cover mold 220 that forms an injection line 225 at one end of the main body mold 210, the inner body in which the protrusion is supported on the main body mold is placed inside a cavity formed between the main body mold and the cover mold.

The one opened end of the inner body 100 protrudes from the inner surface of the cover mold when the main body mold 210 and the cover mold 220 are combined, and it may be sealed in contact with a substantially disk-shaped inner cover forming the injection line 225.

It is preferable that the inner cover is provided in the shape of a disk having an outer diameter, which is approximately the same as the one opened end of the inner body 100.

Herein, the one opened end of the inner body 100 has been illustrated and described as being sealed in contact with the inner cover protruding from the cover mold when the main body mold 210 and the cover mold 220 are combined, but is not limited thereto, and the opened side of the inner body 100 may be sealed using another separate sealing material.

It may fundamentally block the inflow of a molten material, which is forcibly injected during the casting of the outer body 300 for integrating with the inner body 100 by sealing and blocking the one opened end of the inner body 100 with the inner cover or sealing material, into the inner hole of the inner body 100.

Such a sealing material may be provided in the form of an outer cover plate in which the outer end is bent such that the outer surface is pressed into the outer edge of the one opened end of the inner body, or it may be provided in the form of an internal press-fitting plate in which the outer surface is pressed into the inner edge of the one opened end of the inner body 100.

That is, the one opened end of the inner body 100 may be sealed by an inner cover formed to protrude from the inner surface of the cover mold to be combined with the main body mold, but is not limited thereto, and it may be sealed by the press-fitting method of a sealing material or may be sealed with a sealing material in the form of an outer cover plate or an inner press-fitting plate at the one opened end of the inner body.

A core 203 for forming a hole for forming a second inflow and outflow hole, which will be described below, may be integrally provided or may be provided in an assembly type inside of the main body mold to be combined with the cover mold.

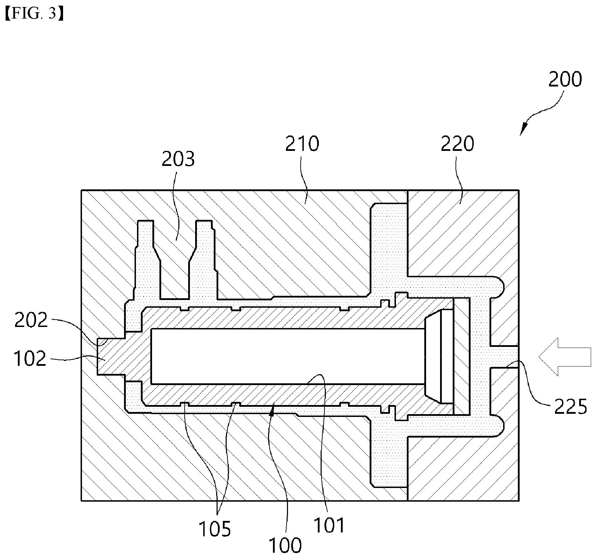

As illustrated in FIG. 3, in a state in which the inner body 100, which is pre-processed by the forging process in the previous process, is arranged in the cavity of the mold 200 made of a main body mold and a cover mold, by forcibly injecting and filling a molten material in which the material is melted into the cavity, the outer body molding step S3 molds an outer body 300 integrated with the inner body by entirely covering the outer surface of the inner body 100.

The mold 200 for molding the outer body 300 so as to be integrated with the inner body 100 is made of an injection mold or a die-casting mold that casts and molds the same product as a machined mold by forcibly injecting a molten material such that the outer body 300 integrated with the inner body may be manufactured by any one of an injection molding method or a die-casting method.

That is, by forcibly injecting and filling a molten material into the cavity through the injection line 225 of the cover mold combined with the main body mold 210 in which the inner body 100 is arranged and then cooling, the interface between the outer surface of the inner body 100 and the inner surface of the outer body 300 is integrally bonded to each other to form an outer body that is integrated with the inner body.

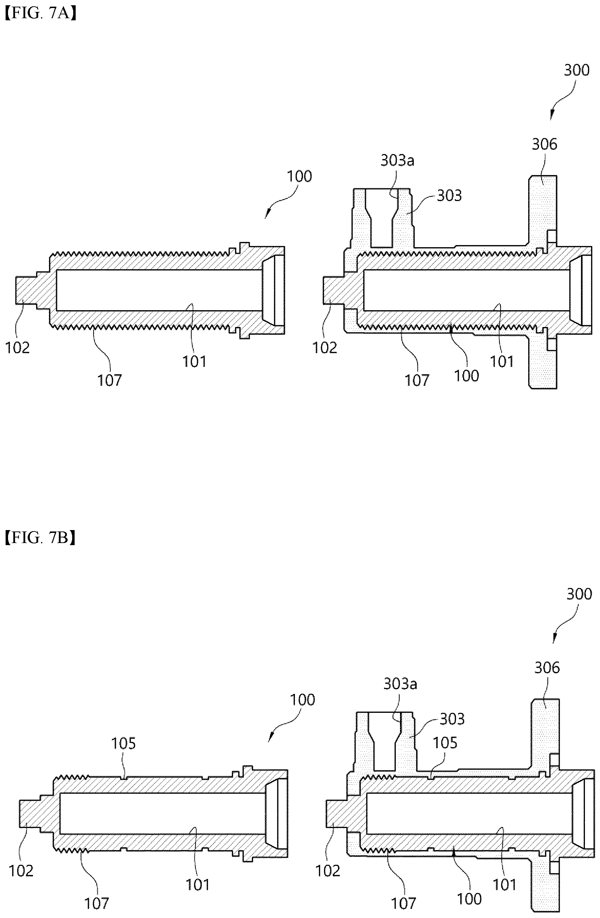

Herein, as illustrated in FIG. 7A, the inner body 100 may form an uneven portion 17 on the entire outer surface corresponding to the outer body so as to increase the bonding area with the inner surface of the outer body, or as illustrated in FIG. 7B, it may locally form an uneven portion 17 so as to increase the bonding area with the inner surface of the outer body in a region corresponding to an outer protrusion which is formed to protrude on the outer surface of the outer body and penetrates through a processed portion such as any one inflow and outflow hole of the first and second inflow and outflow holes.

Such an uneven portion 17 may be provided by being machined into a sawtooth shape in which ridges and valleys are repeatedly formed on the outer surface of the inner body 100.

The body thickness of the inner body becomes thin by the uneven portion 17 additionally formed on the outer surface of the inner body, but since it melts a part of the uneven portion in contact with the hot molten material injected during casting while increasing the thermal conductivity, it is possible to increase the adhesion at the interface between the outer surface of the outer body and the inner surface of the inner body.

In addition, since roughness is formed on the outer surface of the inner body by the uneven portion 17 additionally formed on the outer surface of the inner body, the bonding area at the interface between the outer surface of the outer body and the inner surface of the inner body may be increased, thereby increasing the bonding strength.

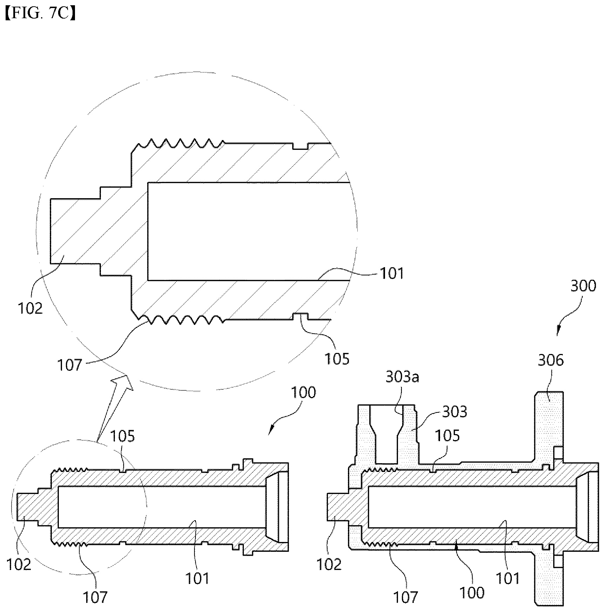

Meanwhile, as illustrated in FIG. 7C, it is preferable that the uneven portion 107 that is formed entirely or locally on the outer surface of the inner body 100 is provided in a pattern in which ridges formed with a sharp end or a sharply acute angle are repeatedly formed, or provided in a pattern in which rounded valleys which are concave downward are repeatedly formed.

When the ridge forming the uneven part is formed in a sharp cross-section, the vertex portion, which is the end of the ridge, is melted by the hot molten material, which is injected during casting, and it is fused with the molten material, thereby increasing the bonding strength between the outer body and the inner body molded by the casting process.

In addition, when the valley forming the uneven portion is formed in a round cross-section, since it may suppress and prevent the occurrence of bubbles as much as possible by smoothing the casting flow of the molten material injected during the casting of the outer body, it may suppress and prevent the occurrence of pores in the outer body molded by the casting process.

In order to cast and mold the outer body, it is preferable that the injection temperature of the molten material injected into the cavity of the mold is set to be relatively higher than the melting temperature of the material constituting the inner body such that melting of the end forming the uneven portion may be smoothly performed to control the casting process.

That is, when the melting temperature of an aluminum alloy material constituting the inner body is approximately 660°C to 670°C, it is preferable that the molten material of the outer body injected into the cavity of the mold is set to be higher than or equal to approximately 670°C.

In addition, the uneven portion has been illustrated and described as being provided in the form of a conchoid that is continuously formed along the circumferential direction on the outer surface of the inner body, but is not limited thereto, and in consideration of the injection direction of the molten material, it may be provided in the form of a straight line extending in the longitudinal direction on the outer surface of the inner body or provided in the form of an oblique line.

In addition, the uneven portion may be provided as a fin member having a thin thickness and protruding outward from the outer surface of the inner body so as to be integrated with the molten material by melting upon contact with the hot molten material which is injected during casting.

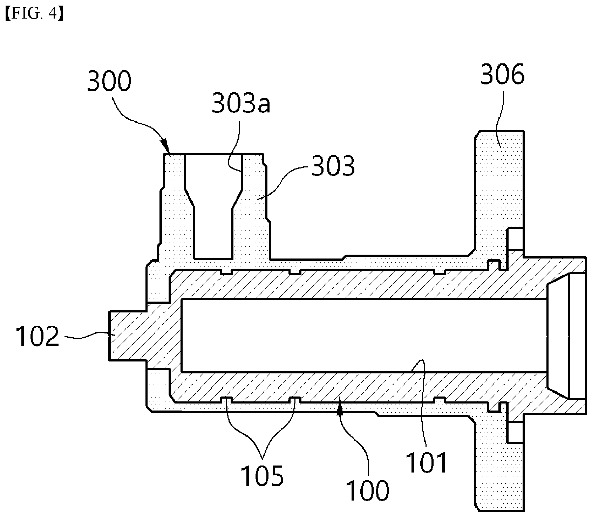

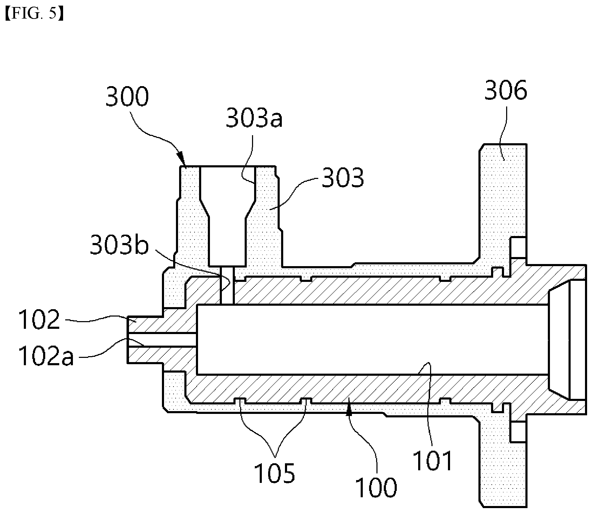

As illustrated in FIGS. 4 and 5, the post-treatment step S4 performs a post-treatment process in which by demolding the mold 200, the cylinder main body in which the inner body 100 and the outer body 300 are integrated is separated from the mold, and then a first inflow and outflow hole connected in communication with an oil tank 50 or a second inflow and outflow hole connected in communication with an oil supply line 55 is formed through the separated cylinder main body.

That is, an outer protrusion 303 having a molding hole 303a whose bottom surface is sealed by a core 203 for forming a hole of the main body mold is provided on the outer surface of the outer body integrated with the inner body, and the protrusion of the inner body is exposed by protruding a certain length from one side end of the outer body.

Accordingly, by machining a through-hole 303b passing through the inner body through the molding hole, a first inflow and outflow hole connected in communication with the oil tank 50 may be formed.

By machining another through-hole 102a passing through the protrusion 102 exposed to the outside at one side end of the outer body 300, a second inflow and outflow hole connected in communication with the oil supply line 55 may be formed.

In this case, the inner body 100 and the outer body 300 may be made of the same aluminum alloy material, but are not limited thereto, and the outer body 300 may be precisely casted and molded, and it may be made of a metal material having a relatively lower mechanical strength than the material constituting the inner body 100 to facilitate the post-treatment machining after molding.

In addition, after the cylinder main body for the master cylinder in which the inner body and the outer body are integrated is removed from the mold and separated, it is possible to perform machining to cut and remove defective parts protruding outside, in addition to the hole processing that penetrates the first and second inflow and outflow holes.

As described above, by primarily pre-processing and molding the inner body with one opened end and the other sealed end in a forging process and then secondarily post-processing and molding the outer body to be integrated with the pre-processed inner body in a casting process, it is possible to manufacture a cylinder main body 10 for a master cylinder having first and second inflow and outflow holes 11 and 12 and a flange portion 306.

In addition, by assembling a piston, a plunger, and a return spring in the inner space of the inner body integrated with the outer body, the manufacture of the master cylinder used between the oil tank and the release cylinder is completed.

### [Industrial Applicability]

According to the method for manufacturing a master cylinder, it is possible to increase the efficiency of manufacturing a master cylinder, which is a key component that pumps oil by converting a petal or electronic force into a hydraulic pressure in a clutch system that blocks or transmits power or a brake system that generates a braking force, in large quantities without defects.

The present invention described above is not limited by the aforementioned exemplary embodiments and the accompanying drawings, and it will be apparent to a person of ordinary skill in the art to which the present invention pertains that various substitutions, modifications, and changes are possible within the scope of the technical spirit of the present invention.

## Claims

1. A method for manufacturing a master cylinder, comprising:
molding an inner body having an inner hole with one opened end and a protrusion at the other sealed end;
arranging the inner body in a cavity of a mold formed by combining a main body mold with a fixing groove into which the protrusion is correspondingly inserted to arrange the inner body therein, and a cover mold that seals the one opened end of the inner body;
molding an outer body to be integrated with the inner body by injecting a molten material into the cavity to cover the entire outer surface of the inner body; and
separating a cylinder main body in which the inner body and the outer body are integrated from the mold to post-treat the cylinder main body.

2. The method of claim 1, wherein in the molding of the inner body, a hollow body with both opened ends is molded by a forging, extruding, or drawing process, and the inner body is molded by integrally sealing a blocking plate at one opened end of the hollow body.

3. The method of claim 1, wherein in the arranging the inner body, when the main body mold and the cover mold are combined, the one opened end of the inner body protrudes from the inner side surface of the cover mold and is sealed in contact with an inner cover forming an injection line.

4. The method of claim 1, wherein the inner body forms an uneven portion on the entire outer surface corresponding to the outer body, or is formed to protrude from the outer surface of the outer body to form an uneven portion locally in a region corresponding to an outer protrusion formed through an inflow and outflow hole.

5. The method of claim 4, wherein the uneven portion is provided in a pattern in which ridges with a sharp end or a sharply acute angle or rounded valleys which are concave downward are repeatedly formed.

6. The method of claim 1, wherein in the molding of the outer body, the injection temperature of a molten material injected into the cavity of the mold is set to a temperature which is relatively higher than the melting temperature of a material constituting the inner body.

7. A master cylinder manufactured by the method according to any one of claims 1 to 6.
